# EUROPEAN PATENT SPECIFICATION

(11) **EP 2 493 099 B1**
(45) Date of publication and mention of the grant of the patent: **11.09.2013**
(21) Application number: 12155692.2
(22) Date of filing: 16.02.2012
(51) Int. Cl.: H04J 3/16, H04L 25/14

(54) **METHOD FOR PROCESSING DIGITAL SIGNALS FOR TRANSMISSION/RECEPTION OF A STREAM OF DIGITAL SIGNALS ON A PLURALITY OF CHANNELS**
VERFHAREN ZUR DIGITALSIGNALVERARBEITUNG ZUR ÜBERTRAGUNG/EMPFANGEN VON EINEM DIGITALSIGNALSTROM ÜBER EINE MEHRZAHL VON KANÄLEN
PROCÉDÉ POUR ÉLABORER DES SIGNAUX NUMERIQUES POUR LA TRANSMISSION/RÉCEPTION D'UN FLUX DE SIGNAUX NUMERIQUES SUR PLUSIEURS CANAUX

(30) Priority: 28.02.2011 IT MI20110304
(43) Date of publication of application: 29.08.2012
(73) Proprietor: SIAE Microelettronica S.p.A., 20093 Cologno Monzese (MI) (IT)
(72) Inventor: Cucchi, Daniele, 20093 Cologno Monzese (IT)
(74) Representative: Raimondi, Margherita

(56) References cited:
- EP-A2- 1 311 096
- WO-A2-01/56190
- US-A1- 2003 152 112

## Description

The present invention relates to a method for the coordinated use of a plurality of transmission channels for digital signals supplied with single digital streams having a size greater than the transmission capacity of each single channel, but not greater than the sum of their individual capacities.

It is known, in the technical sector of digital transmission, as for example in the particular case of digital radio relays, that the connection between two stations, i.e. transmitting station TX and receiving station RX, may be performed using a certain number of transmission channels in parallel.

In particular, in order to improve the transmission capacity, the management of the channels may be performed in different ways, keeping for example several channels (N) active and one or more reserve channels (m) available, to be used in the case where one or more of the active channels is no longer able to transmit correctly (so-called N+m systems).

It is also known that, in this configuration, the channels operate in so-called ON/OFF mode, which allows transmission of the data stream for as long as each channel is able to transmit at the nominal speed, with a transmission quality as per specification, while the channel is switched off and replaced by a reserve channel, if the quality of the channel falls below a certain threshold (for example owing to atmospheric agents such as rain or owing to multiple paths) and the channel no longer manages to transmit at the nominal speed and with the required quality.

Although performing its function, this method of managing the transmission channels has a number of drawbacks including:
- the failure to make use of the total capacity even in the case of optimum transmission conditions, owing to the need to keep in any case one or more reserve channels inactive;
- the long downtime of the channels, resulting also from the time needed to restore synchronization between transmitter and receiver when the channel is switched on again after being switched off.

Also known are techniques designed to solve the aforementioned problems and increase the efficiency of the transmission system as a whole and for example consisting in using all the channels available, without leaving one (or more) channels as reserve channels, and performing continuous transmission while reducing the transmission speed and therefore the transmission capacity, when the quality of a connection deteriorates; it is possible in these cases, for example, to make use of the adaptive modulation technique (ACM) and/or change the error correction algorithms, thus increasing the correction capacity and still allowing the use of all the channels of the transmission system even in the case of an inferior quality of the connection, albeit with a reduced capacity.

Another known case is that of Ethernet connections which use the protocol 802.3ad (known as link aggregation), where a connection is performed on several physical channels in parallel in order to obtain a higher transmission capacity.

With this technique it is possible to use several links in parallel in order to perform a higher capacity connection with each single link, without having to change the physical interfaces of the apparatus (routers or switches).

Said known techniques, although being functional, are not however optimized for management of the transmission channels in the cases where there are variations in the transmission speed and the number of channels available for the connection and/or types of protocol used; this is because they presuppose the use of specific technology (for example the use of Ethernet) and generally require complex procedures and the exchange of a lot of information between the various components involved in the connection, thus creating problems associated with the high cost of implementation in order to obtain the required solution, but also with intrinsic limitations.

The protocol IEEE 802.3ad deals in fact with the problem of how to divide up among several links an Ethernet data stream and recombine it at the end, this technique, however, only being applicable to Ethernet.

US 2003/1.521.12 A1 discloses a method for processing digital signals for transmission/reception from a transmitter to a receiver via a transmission management module and a reception management module, on/by a plurality of channels with a respective capacity, of a data stream comprising, in a time unit, an assigned quantity of basic units of digital signals not greater than the sum of the individual transmission capacities of the channels, said method using a table to combine and use the different channel capacities in the most efficient way, the use of a table taking up a lot of memory and requiring a great amount of overhead information to be sent to the receiver.

The technical problem which is posed, therefore, is to develop a method which is able to use in a coordinated manner a set of digital transmission channels, each with an assigned nominal capacity, in order to provide data transmission where:
- the overall transmission capacity is maximized, exploiting in the best possible manner the capacity of each channel;
- the system is able to perform transmission without having to know the type of information conveyed or the protocol used in the conveyed signal;
- the overall latency introduced by the transmission during transit of the information stream is minimized;
- the latency is uniform for all the information which passes through the system and there is no lack of uniformity due to the use of different transmission channels with a different transmission capacity which may also be variable over time;
- the method requires a minimum exchange of information both between the transmitter and the source of the signal to be transmitted and between the receiver and the transmitter in the transmission system, one part of said information representing the transmission capacity available depending on the quality of each channel;
- the available capacity - even though variable - of each channel is always fully used.

In connection with this problem it is also required that this method should be easy to implement so as to allow a reduction of the circuitry and a consequent reduction in the corresponding costs for production of the apparatus implementing the method.

These results are achieved according to the present invention by a method for processing digital signals for transmitting/receiving on a plurality of transmission channels a stream of digital data with a size greater than that of each single channel, according to the characteristic features of Claim 1.

Further details may be obtained from the following more detailed description of a non-limiting example of embodiment of a method for processing signals according to the present invention provided with reference to the accompanying drawings in which:
- Figure 1:: shows a summary block diagram of an example of a transmission structure to which the method according to the present invention is applied; and
- Figure 2:: shows a diagram of the streams of the signals used by the method according to the present invention for transmitting the stream F_{Tx} according to Fig. 1.

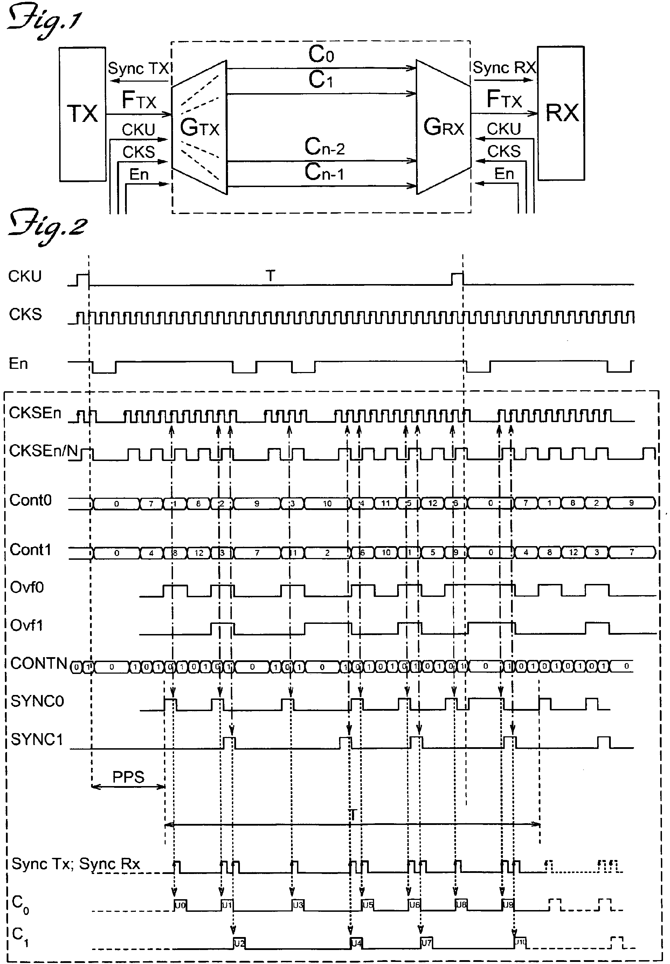

With reference to Figure 1 which shows in schematic form the general structure of a transmission system, comprising:
- at least one source TX able to provide a digital stream F_{TX} and at least one receiver RX able to receive said stream F_{Tx};
- a plurality of N digital transmission channels Cᵢ, each with a nominal capacity Cᵢ such as to determine a total, known, existing capacity c_{TOT}=c₀+c₂+ ... +cₙ₋₁ of the transmission channels Cᵢ;
- the capacity of the stream F_{TX} being in any case not greater than the total maximum capacity c_{TOT} of the transmission channels Cᵢ;
- at least one transmission management apparatus GTX, which must distribute the stream F_{TX} on the channels Cᵢ, and at least one reception management apparatus GRX which has the function of receiving the streams from the channels Cᵢ and recombining the original stream F_{TX} for forwarding to RX;

Assuming firstly, for the purposes of the present description, the following definitions:
- Basic unit Uj =: the basic data (expressed in bits, nibbles, bytes, or multiples of a byte) into which the stream Ftx entering GTX is divided; the unit Uj has a constant size;
- Time unit T =: a predefined time interval (also called Frame Period) during which each channel Cᵢ transmits a number of basic units Uj equal to its existing capacity Cᵢ; therefore the stream F_{TX} has, in a given time unit T, a quantity c_{TOT} of basic units Uj equal to the sum of the existing capacities cᵢ of the single channels Cᵢ within the same time unit;
- Maximum channel capacity cₘₐₓ =: the value of cᵢ corresponding to the nominal value of the channel Cᵢ with greatest capacity; cₘₐₓ may not be exceeded by any existing capacity cᵢ of the transmission channels cᵢ;
- Time unit clock CKU =: the clock which defines the frequency of each time unit T;
- System clock CKS =: clock with frequency which is a multiple of the time unit clock CKU defined by CKS=CKU*N* (cₘₐₓ+m) ; wherein cₘₐₓ is the said nominal value of the channel Cᵢ of greatest capacity, N is the number of transmission channels and m is a whole number >0 which determines, for each channel Cᵢ, a number of fronts of the system clock CKS, present in the Time Unit T, greater than the maximum capacity cₘₐₓ, or a number of fronts greater than Cmax*N;
- Enable signal (En) =: signal which enables a number of transition fronts of CKS equal to N*cₘₐₓ in each period T defined by CKU, or disables N*m transition fronts of CKS;

The two clocks, time unit clock CKU and system clock CKS, and the enable signal En are determined by the transmission characteristics and are therefore supplied by the user of the method.

Based on the above elements the method according to the present invention for transmission of the stream F_{TX} of data supplied from the source TX on a plurality N of transmission channels Cᵢ, comprises the following steps:
- defining a derived clock signal CKSEn, formed by the fronts of the system clock CKS derived from enabling of the Enable signal En; CKSEn=CKS&En; and a
derived Enable Signal CKSEn/N = obtained from division by N of the fronts of CKSEn;
- defining N status counters (Contᵢ), each associated with a corresponding channel Cᵢ, which count for cᵢ below the clock CKSEn, incrementing only if they are enabled by CKSEn/N and go into overflow at c_{MAX}, memorizing the existing overflow value;
- defining N overflow registers (Ovfᵢ) with binary values (0/1) each associated with a corresponding channel Cᵢ;
- defining a channel counter CONTN which counts by 1 moved by CKSEn and assumes the sequence of values 0, 1, 2, ... , N-1; 0, 1, 2, ...
- defining N synchronization signals SYNCᵢ each designed to enable sending/extraction of the units Uj to/from the corresponding Cᵢ;
- defining a signal SyncTX;SyncRX for enabling input of the data Uj from the source TX;GRX to the receiver GTX;RX; SyncTX;SyncRX = (ΣᵢSyncᵢ) & CKSEn
- initializing the system at a time unit clock CKU by setting:

| | | |
|---|---|---|
| all the status counters: | Contᵢ | = 0, |
| all the overflow registers | Ovfᵢ | = 0, |
| the channel counter | CONTN | = 0, |
| all the signals | SYNCi | = 0 |

taking account of the need to enable individual variations during the intervals of the transition clocks CKS so that the transition occurs at the immediately following transition clock front CKS:
- at each front of the signal CKSEn, but only if CKSEn/N is enabled, each channel status counter Contᵢ is incremented by the value cᵢ equal to the existing capacity of the channel cᵢ; Contᵢ = Cont_{i prec}. + ci;
- if Contᵢ ≥ cₘₐₓ, Contᵢ is set to Conti - cₘₐₓ, and
- the overflow signal of the channel Cᵢ is forced to 1, Ovfᵢ=1
- at each front of the clock signal CKSEn the value of CONTN (channel counter) is incremented;
- if the channel Cᵢ corresponding to the existing value of the counter (CONTN) is in overflow, i.e. Ovfᵢ=1, the signal SYNCᵢ is activated;
activation of the signals SYNCᵢ causes generation of the signal SYNCTX sent to TX which in turn sends the existing unit Uⱼ to GTX which inputs it onto the channel Cᵢ enabled by Syncᵢ for transmission.

From Figure 2 it can also be seen that the actual input of all the basic units Uⱼ of a frame T onto the respective channels Cᵢ is performed with a so-called PPS (Pipeline Shift) delay (generally known as "pipelining" in the art of processing circuits) in relation to the frame period T, between two successive clock fronts CKU, during which processing according to the method of the present invention is performed.

Figure 2 shows the progression of the various signals used by the method according to the invention in connection with an example of embodiment where:
N = 2, i.e. two transmission channels, C₀ and C₁, with a maximum capacity cₘₐₓ=13; correspondingly the overflow value of the counters Contᵢ is = 13;
the existing capacity cᵢ of the channels C₁ being respectively:
   c₀=7 and c₁=4 ;
the stream F_{TX} will therefore be formed by c₀₊c₁=7+4=11 units Uⱼ for each time interval T and these units will be transmitted, assigning 7 to the channel C₀ and 4 to the channel C₁;
the system clock CKS has a frequency CKS=2*(13+3)=32, where m=3.

Since cₘₐₓ=13 via the Enable signal En it is required to generate a signal CKSEn with 13*2=26 cycles of CKS; consequently CKSEn/N will have 13 clock cycles for each Time Unit T.

Below these signals the values which the channel counters Cont₀ and Cont₁ assume at each cycle CKSEn/N are shown; it can be seen that the first counter is a counter with increment 7 and the second counter is likewise a counter with increment 4.

Figure 2 also shows the progression of the signals Ovf₁ and Ovf₂: in each cycle of CKSEn/N where the counters Cont₀ and/or Cont₁ reach the overflow value 13, the corresponding signal Ovf₀/Ovf₁ is forced to 1;

if Ovf₀/Ovf₁=1, the corresponding synchronism signal SYNC0/SYNC1 is enabled in each case when the value of ContN (which, being N=2, is a sequence of 0,1 which changes value at each clock front CKSEn) corresponds to the respective channel 0 or 1 as shown in the Figure.

From the figure it can also be seen how in each period T 7 basic units Uj are sent on the channel C₀ and 4 units Uj are sent on the channel C₁ in a sequence which is repeated for each cycle and which forms the concatenation frame.

Figure 2 also shows the actual input of the signals Uj into the respective channel Cᵢ in accordance with the procedure known as counter-directionality where the enabling signal SyncTX for input of the data is sent from the receiver to the source and occurs during a frame period T shifted by a PPS delay as explained above.

It can also be noted how this method allows adaptation in a very simple manner to possible changes in capacity cᵢ which may affect a channel Cᵢ; in fact it is sufficient to modify the values used by the counters Contᵢ (for example from 7 to 6 in Cont₀ or from 4 a 5 in Cont₁) in order to adapt, to the new capacity cᵢ, sending of units Uj without having to adjust the system clock CKS, this resulting in a significant simplification of the circuitry.

This is performed by making known during the existing frame period the reduced transmission capacity of each channel to which the total incoming stream F_{TX} and the increment of the counters must be correspondingly adapted on the clock front CKU for starting the following frame period T.

According to the invention it is envisaged that on the receiving side Rx, the GRX apparatus need not be informed in advance of the structure of the frame in order to recombine the stream FTx with the basic units Uⱼ supplied by the different channels Ci; in fact it is sufficient for the GRX receiving unit to know the same information used during transmission:
- time clock unit CKU and system clock CKS;
- number N of channels Cᵢ
- existing capacity cᵢ of each transmission channel Cᵢ;
- maximum capacity c_{MAX}
- Enable signal En

in order to be able to apply correctly the same procedure used for transmission and extract the individual basic units Uj from the various channels Cᵢ and send them to the receiver RX with enabling of the signal SyncRX for recomposition of the starting stream FTx.

In this case, without altering the method according to the present invention, transmission of the signal is of the co-directional type since the signal SyncRX for enabling sending of the data Uj to the receiver RX is sent from the source GRX to the receiver RX.

It is therefore clear how with the signal processing method according to present invention it is possible to distribute automatically a stream FTX of digital data on N channels Cᵢ which form the transmission medium so that:
- the overall transmission capacity is maximized, because the maximum available capacity of each channel Cᵢ is always used;
- the device managing the transmission channels GTX and reception channels GRX requires a reduced amount of information in order to perform the distribution and extraction operations during transmission and reception, respectively;
- it is not required to define complex tables containing information on the structure for use of the channels and exchange them between transmitting station and receiving station;
- transmission/reception is transparent as regards contents of the stream generated by the channel and therefore its internal structure and the protocols used which therefore do not have to be known by the transmission system;
- the overall latency introduced during transit of the information stream is minimized;
- the latency is uniform for all information which passes through the system, namely the jitter during reception delays between the blocks from different physical channels Cᵢ with different capacity cᵢ, is minimized, all the other system parameters being equal;
- any (temporary) variations in the capacity of a given channel, for example reductions due to rain affecting the radio relay connections, are managed simply by calculating the reduced existing value c'_{TOT}<c_{TOT} of the total transmission capacity (= sum of the existing reduced capacities of the single channels); in this case also therefore the maximum use of the band available, the minimum overall latency and the minimum variation (jitter) affecting the signal being received are maintained; it can be seen, for example from Figure 2, that sending on the channel 1 of the third unit U₂ of the four units to be assigned to it occurs with reasonable accuracy at about three quarters of the PPS shifted frame period.

Although described in connection with certain constructional forms and certain preferred examples of embodiment of the invention, it is understood that the scope of protection of the present patent is defined solely by the following claims.

## Claims

1. Method for processing digital signals for transmission/reception from a transmitter TX to a receiver RX via a transmission management module GTX and a reception management module GRX, on/by a plurality N of channels Cᵢ with a respective capacity cᵢ, of a data stream F_{TX} comprising, in a time unit T, an assigned quantity of basic units Uj of digital signals not greater than the sum C_{TOT} of the individual transmission capacities cᵢ of the channels Cᵢ, said transmission/reception being regulated by a system clock CKS and by an enable signal En able to generate a clock signal CKSEn with a number of fronts which is smaller compared to the system clock CKS,
the method being **characterized in that** it comprises the following steps:
- defining a derived clock signal CKSEn = CKS&En, comprising the fronts of the system clock CKS derived from enabling of the Enable signal En;
- defining a derived Enable signal CKSEn/N obtained from division by N of the fronts of the derived clock signal CKSEn;
- defining N **channel** status counters Contᵢ, each associated with a corresponding channel Cᵢ, which count **with increment** cᵢ up to cₘₐₓ, cₘₐₓ **indicating the maximum channel capacity;**
- defining N overflow registers Ovfᵢ with binary values, i.e. 0/1, each associated with a corresponding channel Cᵢ;
- defining a channel counter CONTN which assumes the sequence of values 0,1,2... , N-1;
- defining N synchronization signals SYNCᵢ each designed to enable sending of the units Uj to the corresponding channel Cᵢ;
- initializing the system at a time unit clock CKU by setting:
| | |
|---|---|
| all the **channel** status counters | **Cont**ᵢ = 0, |
| all the overflow **registers** | Ovfᵢ = 0, |
| the channel counter | **CONT**N = 0, |
| all the signals | SYNCi = 0 |
- incrementing at each front of the derived clock signal CKSEn enabled by the derived enable signal CKSEn/N the value of each channel **status** counter Contᵢ by the value cᵢ equal to the existing capacity of the channel Cᵢ;
- if Contᵢ≥ₘₐₓ forcing Contᵢ=Contᵢ-cₘₐₓ, and
- forcing the overflow **register** of the channel Cᵢ to 1, Ovfᵢ=1
- incrementing by one unit the value of the channel counter CONTN at each front of the derived clock signal CKSEn;
- activating the signal SYNCᵢ if the channel Cᵢ corresponding to the existing value of the channel counter **CONTN** is in overflow, i.e. **if** Ovfᵢ=1;
- generating and sending a signal (SyncTX;SyncRX) from the source (TX;GRX) to the receiver (GTX;RX) for enabling sending of the existing signal **data unit** Uj on the enabled channel Cᵢ.

2. Method according to Claim 1, **characterized in that** the basic unit Uj transmitted has a constant magnitude.

3. Method according to Claim 1, **characterized in that** the time unit T is defined by two successive clock fronts of the time unit clock CKU.

4. Method according to Claim 1, **characterized in that** the system clock CKS has a frequency which is a multiple of the time unit clock CKU defined by CKS=CKU*N*(cₘₐₓ+m), **m being an integer >= 0.**

5. Method according to Claim 1, **characterized in that** enabling SyncTX for inputting of the basic data Uj from the transmitter TX to the transmission management apparatus GTX is counter-directional, **i.e. from GTX to TX.**

6. Method according to Claim 1, **characterized in that** enabling SyncRX for inputting of the basic data Uj from the reception management apparatus GRX to the receiver RX is co-directional, **i.e. from GRX** to **RX**.

7. Method according to Claim 1, **characterized in that** the transmission capacity c'ᵢ of each channel Ci is reduced compared to its maximum value cᵢ and the total transmission capacity c'_{TOT} is less than the maximum possible capacity C_{TOT}.

8. Method according to Claim 7, **characterized in that** the system clock CKS, the time unit T and the time unit clock CKU are constant.

9. Method for the recomposition, at a reception module GRX, of a data flow (FTx) received and extracted from N different channels Cᵢ of assigned capacity cᵢ and comprising, in a time unit T, an assigned quantity of basic units Uj of digital signals not greater than the sum C_{TOT} of the individual transmission capacities cᵢ of the channels Cᵢ, there being available at said reception module only the following information:
- time unit clock CKU and system clock CKS;
- Enable signal En
- number N of the transmission channels Cᵢ;
- existing capacity cᵢ of each transmission channel Cᵢ;
- maximum capacity c_{MAX} of the transmission channels; used during transmission for processing the said data flow (FTx) on the said channels Ci
**characterized in that** it comprises the following steps :
- defining a derived clock signal CKSEn = CKS&En, comprising the fronts of the system clock CKS derived from enabling of the Enable signal En;
- defining a derived Enable signal CKSEn/N obtained from division by N of the fronts of the derived clock signal CKSEn;
- defining N channel status counters Contᵢ, each associated with a corresponding channel Cᵢ, which count for with increment cᵢ up to cₘₐₓ, cₘₐₓ indicating the maximum channel capacity;
- defining N overflow registers Ovfᵢ with binary values, i.e. 0/1, each associated with a corresponding channel Cᵢ;
- defining a channel counter CONTN which assumes the sequence of values 0,1,2... , N-1;
- defining N synchronization signals SYNCᵢ each designed to enable sending of the units Uj to the corresponding channel Cᵢ;
- initializing the system at a time unit clock CKU by setting:
| | |
|---|---|
| all the channel status counters | Contᵢ = 0, |
| all the overflow registers | Ovfᵢ = 0, |
| the channel counter | CONTN = 0, |
| all the signals | SYNCi = 0 |
- incrementing at each front of the derived clock signal CKSEn enabled by the derived enable signal CKSEn/N the value of each channel status counter Contᵢ by the value cᵢ equal to the existing capacity of the channel Cᵢ;
- if Contᵢ≥Cₘₐₓ forcing Contᵢ=Contᵢ-Cₘₐₓ, and
- forcing the overflow register of the channel Cᵢ to 1, Ovfᵢ=1
- incrementing by one unit the value of the channel counter CONTN at each front of the derived clock signal CKSEn;
- activating the signal SYNCᵢ if the channel Ci corresponding to the existing value of the channel counter CONTN is in overflow, i.e. if Ovfᵢ=1;
- generating and sending a signal (SyncRX) from the reception module GRX to the receiver RX for enabling reception of the existing signal data unit Uj from the enabled channel Cᵢ.

10. Method according to Claim 9, **characterized in that** the existing total capacity c'_{TOT} of the channels Cᵢ is less than the total maximum capacity c_{TOT} of the channels Ci themselves.

## Patentansprüche

1. Verfahren zum Verarbeiten von digitalen Signalen für das Senden/Empfangen von einem Sender TX zu einem Empfänger RX mittels eines Sendemanagementmoduls GTX und eines Empfangsmanagementmoduls GRX auf/durch eine Anzahl N von Kanälen Cᵢ mit einer jeweiligen Kapazität cᵢ eines Datenstroms F_{TX}, der in einer Zeiteinheit T eine zugeordnete Menge von Grundeinheiten Uj von digitalen Signalen umfasst, die nicht größer als die Summe C_{TOT} der individuellen Sendekapazitäten cᵢ der Kanäle Cᵢ ist, wobei das Senden/Empfangen durch eine Systemuhr CKS und durch ein Aktivierungssignal En reguliert wird, das ein Uhrsignal CKSEn mit einer Anzahl von Fronten erzeugen kann, die verglichen mit der Systemuhr CKS kleiner ist,
wobei das Verfahren **dadurch gekennzeichnet ist, dass** es die folgenden Schritte umfasst:
- Ausbilden eines abgeleiteten Uhrsignals CKSEn = CKS&En, welches die Fronten der Systemuhr CKS umfasst, die aus dem Aktivieren des Aktivierungssignals En abgeleitet sind;
- Ausbilden eines abgeleiteten Aktivierungssignals CKSEn/N, das durch Division der Fronten des abgeleiteten Uhrsignals CKSEn durch N erhalten wird;
- Ausbilden von N Kanalstatuszählern Contᵢ, die jeweils einem entsprechenden Kanal Cᵢ zugeordnet sind und die mit Inkrement cᵢ bis zu cₘₐₓ zählen, wobei cₘₐₓ die maximale Kanalkapazität anzeigt;
- Ausbilden von N Überlaufregistern Ovfᵢ mit binären Werten, d.h. 0/1, wobei jeder einem entsprechenden Kanal Cᵢ zzugeordnet ist,
- Ausbilden eines Kanalzählers CONTN, der die Folge von Werten 0,1, 2..., N-1 annimmt;
- Ausbilden von N Synchronisierungssignalen SYNCᵢ, die jeweils ausgelegt sind, um das Senden der Einheiten Uj zu dem entsprechenden Kanal Cᵢ zu ermöglichen;
- Initialisieren des Systems an einer Zeiteinheitsuhr CKU durch Einstellen von:
| | |
|---|---|
| allen Kanalstatuszählern | Contᵢ = 0, |
| allen Überlaufregistern | Ovfᵢ = 0, |
| des Kanalzählers | CONTN = 0, |
| aller Signale | SYNCi = 0 |
- Inkrementieren an jeder Front des abgeleiteten Uhrsignals CKSEn, das durch das abgeleitete Aktivierungssignal CKSEn/N aktiviert wurde, des Werts jedes Kanalstatuszählers Contᵢ um den Wert cᵢ gleich der vorliegenden Kapazität des Kanals Cᵢ;
- wenn Contᵢ > cₘₐₓ Erzwingen von Contᵢ=Contᵢ-cₘₐₓ und
- Zwingen des Überlaufregisters des Kanals Cᵢ zu 1, Ovfᵢ=1
- Inkrementieren um eine Einheit des Werts des Kanalzählers CONTN an jeder Front des abgeleiteten Uhrsignals CKSEn;
- Aktivieren des Signals SYNCᵢ, wenn der Kanal Cᵢ, der dem bestehenden Wert des Kanalzählers CONTN entspricht, überläuft, d.h. wenn Ovfᵢ=1;
- Erzeugen und Senden eines Signals (SyncTX; SyncRX) von der Quelle (TX;GRX) zu dem Empfänger (GTX;RX) zum Ermöglichen des Sendens der bestehenden Signaldateneinheit Uj an dem aktivierten Kanal Cᵢ.

2. Verfahren nach Anspruch 1, **dadurch gekennzeichnet, dass** die gesendete Grundeinheit Uj eine konstante Größenordnung aufweist.

3. Verfahren nach Anspruch 1, **dadurch gekennzeichnet, dass** die Zeiteinheit T durch zwei aufeinanderfolgende Uhrfronten der Zeiteinheitsuhr CKU festgelegt wird.

4. Verfahren nach Anspruch 1, **dadurch gekennzeichnet, dass** die Systemuhr CKS eine Frequenz aufweist, die ein Mehrfaches der Zeiteinheitsuhr CKU ist, die durch CKS=CKU*N* (cₘₐₓ+m) definiert ist, wobei m eine ganze Zahl >= 0 ist.

5. Verfahren nach Anspruch 1, **dadurch gekennzeichnet, dass** das Aktivieren von SyncTX zum Eingeben der Grunddaten Uj von dem Sender TX zu der Sendemanagementeinrichtung GTX gegengerichtet ist, d.h. von GTX zu TX.

6. Verfahren nach Anspruch 1, **dadurch gekennzeichnet, dass** das Aktivieren von SyncRX zum Eingeben der Grunddaten Uj von der Empfangsmanagementeinrichtung GRX zu dem Empfänger RX gleichgerichtet ist, d.h. von GRX zu RX.

7. Verfahren nach Anspruch 1, **dadurch gekennzeichnet, dass** die Sendekapazität C'ᵢ jedes Kanals Ci verglichen zu ihrem Maximalwert cᵢ reduziert ist und die gesamte Sendekapazität c'_{TOT} kleiner als die maximal mögliche Kapazität c_{TOT} ist.

8. Verfahren nach Anspruch 7, **dadurch gekennzeichnet, dass** die Systemuhr CKS, die Zeiteinheit T und die Zeiteinheitsuhr CKU konstant sind.

9. Verfahren für die Neusammensetzung an einem Empfangsmodul GRX eines Datenflusses (Frx), der von N unterschiedlichen Kanälen Cᵢ zugeordneter Kapazität cᵢ erhalten und extrahiert wurde und in einer Zeiteinheit T eine zugeordnete Menge an Grundeinheiten Uj von digitalen Signalen umfasst, die nicht größer als die Summe C_{TOT} der einzelnen Sendekapazitäten cᵢ der Kanäle Cᵢ ist, wobei an dem Empfangsmodul nur die folgenden Informationen verfügbar sind:
- Zeiteinheitsuhr CKU und Systemuhr CKS;
- Aktivierungssignal En
- Anzahl N der Sendekanäle Cᵢ;
- vorhandene Kapazität cᵢ jedes Sendekanals Cᵢ;
- maximale Kapazität C_{MAX} der Sendekanäle;
die während des Sendens zum Verarbeiten des Datenflusses (Frx) an den Kanälen Ci verwendet werden,
**dadurch gekennzeichnet, dass** es die folgenden Schritte umfasst:
- Ausbilden eines abgeleiteten Uhrsignals CKSEn = CKS&En, das die Fronten der Systemuhr CKS, abgeleitet aus dem Aktivieren des Aktivierungssignals En, umfasst;
- Ausbilden eines abgeleiteten Aktivierungssignals CKSEn/N, das durch Division der Fronten des abgeleiteten Uhrsignals CKSEn durch N erhalten wird;
- Ausbilden von N Kanalstatuszählern Contᵢ, die jeweils einem entsprechenden Kanal Cᵢ zugeordnet sind und die mit Inkrement cᵢ bis zu Cₘₐₓ zählen, wobei Cₘₐₓ die maximale Kanalkapazität anzeigt;
- Ausbilden von N Überlaufregistern Ovfᵢ mit binären Werten, d.h. 0/1, wobei jeder einem entsprechenden Kanal Cᵢ zugeordnet ist;
- Ausbilden eines Kanalzählers CONTN, der die Folge von Werten 0, 1, 2..., N-1 annimmt;
- Ausbilden von N Synchronisierungssignalen SYNCᵢ, die jeweils ausgelegt sind, um ein Senden der Einheiten Uj zu dem entsprechenden Kanal Cᵢ zu ermöglichen;
- Initialisieren des Systems an einer Zeiteinheitsuhr CKU durch Einstellen von:
| | |
|---|---|
| allen Kanalstatuszählern | Contᵢ = 0, |
| allen Überlaufregistern | Ovfᵢ =0, |
| des Kanalzählers | CONTN = 0, |
| aller Signale | SYNCi = 0 |
- Inkrementieren an jeder Front des abgeleiteten Uhrsignals CKSEn, das durch das abgeleitete Aktivierungssignal CKSEn/N aktiviert wurde, des Werts jedes Kanalstatuszählers Contᵢ um den Wert cᵢ gleich der vorliegenden Kapazität des Kanals Ci;
- wenn Contᵢ≥Cₘₐₓ, Erzwingen von Contᵢ = Contᵢ-cₘₐₓ und
- Zwingen des Überlaufregisters des Kanals Cᵢ zu 1, Ovfᵢ=1
- Inkrementieren um eine Einheit des Werts des Kanalzählers CONTN an jeder Front des abgeleiteten Uhrsignals CKSEn;
- Aktivieren des Signals SYNCᵢ, wenn der Kanal Cᵢ, der dem bestehenden Wert des Kanalzählers CONTN entspricht, überläuft, d.h. wenn Ofvᵢ=1;
- Erzeugen und Senden eines Signals (SyncRX) von dem Empfangsmodul GRX zu dem Empfänger RX zum Aktivieren des Empfangs der vorliegenden Signaldateneinheit Uj von dem aktivierten Kanal Cᵢ.

10. Verfahren nach Anspruch 9, **dadurch gekennzeichnet, dass** die bestehende gesamte Kapazität C'_{TOT} der Kanäle Cᵢ kleiner als die gesamte maximale Kapazität c_{TOT} der Kanäle Cᵢ selbst ist.

## Revendications

1. Procédé de traitement de signaux numériques pour une transmission/réception depuis un transmetteur TX à un récepteur RX par l'intermédiaire d'un module de gestion de transmission GTX et d'un module de gestion de réception GRX, sur/par une pluralité N de canaux Cᵢ avec une capacité respective cᵢ, d'un flux de données F_{TX} comprenant, dans une unité temporelle T, une quantité attribuée d'unités de base Uj de signaux numériques non supérieure à la somme C_{TOT} des capacités individuelles de transmission cᵢ des canaux Cᵢ, ladite transmission/réception étant régulée par une horloge système CKS et par un signal de validation En apte à générer un signal d'horloge CKSEn avec un certain nombre de fronts qui est plus petit par rapport à l'horloge système CKS,
le procédé étant **caractérisé en ce qu'**il comprend les étapes suivantes :
- définition d'un signal d'horloge dérivé CKSEn = CKS&En, comprenant les fronts de l'horloge système CKS dérivés de la validation du signal de validation En ;
- définition d'un signal de validation dérivé CKSEn/N obtenu à partir d'une division par N des fronts du signal d'horloge dérivé CKSEn ;
- définition de N compteurs de statut de canal Contᵢ, chacun associé avec un canal Cᵢ correspondant, qui comptent avec un incrément cᵢ jusqu'à cₘₐₓ, cₘₐₓ indiquant la capacité maximum de canal ;
- définition de N registres de dépassement de capacité Ovfᵢ avec des valeurs binaires, à savoir 0/1, chacun associé avec un canal Cᵢ correspondant ;
- définition d'un compteur de canal CONTN qui assume la séquence de valeurs 0, 1, 2, ..., N-1 ;
- définition de N signaux de synchronisation SYNCᵢ, chacun conçu pour permettre l'envoi des unités Uj au canal Cᵢ correspondant ;
- initialisation du système à une horloge CKU à unité temporelle en fixant :
| | |
|---|---|
| tous les compteurs de statut de canal | Contᵢ = 0, |
| tous les registres de dépassement de capacité | Ovfᵢ = 0, |
| le compteur de canal | CONTN = 0, |
| tous les signaux | SYNCᵢ = 0 |
- incrémentation à chaque front du signal d'horloge dérivé CKSEn activé par le signal de validation dérivé CKSEn/N de la valeur de chaque compteur de statut de canal Contᵢ par la valeur cᵢ égale à la capacité existante du canal Cᵢ ;
- si Contᵢ ≥ cₘₐₓ, forçage de Contᵢ = Contᵢ -cₘₐₓ, et
- forçage du registre de dépassement de capacité du canal Ci à 1, Ovfᵢ = 1
- incrémentation d'une unité de la valeur du compteur de canal CONTN à chaque front du signal d'horloge dérivé CKSEn ;
- activation du signal SYNCᵢ si le canal Cᵢ correspondant à la valeur existante du compteur de canal CONTN est en dépassement de capacité, à savoir si Ovfᵢ = 1 ;
- génération et envoi d'un signal (SyncTX ; SyncRX) de la source (TX ; GRX) au récepteur (GTX ; RX) pour activer l'envoi de l'unité de données Uj du signal existant sur le canal Cᵢ validé.

2. Procédé selon la revendication 1, **caractérisé en ce que** l'unité de base Uj transmise a une ampleur constante.

3. Procédé selon la revendication 1, **caractérisé en ce que** l'unité temporelle T est définie par deux fronts d'horloge successifs de l'horloge CKU à unité temporelle.

4. Procédé selon la revendication 1, **caractérisé en ce que** l'horloge système CKS a une fréquence qui est un multiple de l'horloge CKU à unité temporelle définie par CKS = CKU*N*(cₘₐₓ+m), m étant un entier ≥ 0.

5. Procédé selon la revendication 1, **caractérisé en ce que** la validation de SyncTX pour une saisie des données de base Uj depuis le transmetteur Tx jusque dans l'appareil de gestion de transmission GTX est contre-directionnelle, à savoir de GTX à TX.

6. Procédé selon la revendication 1, **caractérisé en ce que** la validation de SyncRX pour une entrée des données de base Uj depuis l'appareil de gestion de réception GRX jusqu'au récepteur RX est co-directionnelle, à savoir de GRX à RX.

7. Procédé selon la revendication 1, **caractérisé en ce que** la capacité de transmission c'ᵢ de chaque canal Cᵢ est réduite par rapport à sa valeur maximum cᵢ et la capacité totale de transmission c'_{TOT} est inférieure à la capacité maximum possible c_{TOT}.

8. Procédé selon la revendication 7, **caractérisé en ce que** l'horloge système CKS, l'unité temporelle T et l'horloge CKU à unité temporelle sont constantes.

9. Procédé pour la recomposition, au niveau d'un module de réception GRX, d'un flux de données (FTx) reçu et extrait de N différents canaux Cᵢ de capacité attribuée cᵢ et comprenant, dans une unité temporelle T, une quantité attribuée d'unités de base Uj de signaux numériques non supérieure à la somme C_{TOT} des capacités individuelles de transmission cᵢ des canaux Cᵢ, n'étant disponible au niveau dudit module de réception que les informations suivantes :
- une horloge CKU à unité temporelle et une horloge système CKS ;
- un signal d'activation En
- un nombre N des canaux de transmission Cᵢ;
- une capacité existante cᵢ de chaque canal de transmission Cᵢ ;
- une capacité maximum c_{MAX} des canaux de transmission ; utilisées pendant la transmission pour un traitement dudit flux de données (FTx) sur lesdits canaux Cᵢ
**caractérisé en ce qu'**il comprend les étapes suivantes :
- définition d'un signal d'horloge dérivé CKSEn = CKS&En, comprenant les fronts de l'horloge système CKS dérivés de l'activation du signal d'activation En ;
- définition d'un signal d'activation dérivé CKSEn/N obtenu à partir d'une division par N des fronts du signal d'horloge dérivé CKSEn ;
- définition de N compteurs Contᵢ de statut de canal, chacun associé avec un canal Cᵢ correspondant, qui comptent avec un incrément cᵢ jusqu'à cₘₐₓ, cₘₐₓ indiquant la capacité maximum de canal ;
- définition de N registres de dépassement de capacité Ovfᵢ avec des valeurs binaires, à savoir 0/1, chacun associé avec un canal Cᵢ correspondant ;
- définition d'un compteur de canal CONTN qui assume la séquence de valeurs 0, 1, 2, ..., N-1 ;
- définition de N signaux de synchronisation SYNCᵢ, chacun conçu pour activer l'envoi des unités Uj au canal Cᵢ correspondant ;
- initialisation du système à une horloge CKU à unité de temps en fixant :
| | |
|---|---|
| tous les compteurs de statut de canal | Contᵢ = 0, |
| tous les registres de dépassement de capacité | Ovfᵢ = 0, |
| le compteur de canal | CONTN = 0, |
| tous les signaux | SYNCᵢ = 0 |
- incrémentation à chaque front du signal d'horloge dérivé CKSEn activé par le signal d'activation dérivé CKSEn/N de la valeur de chaque compteur Contᵢ de statut de canal par la valeur cᵢ égale à la capacité existante du canal Cᵢ ;
- si Contᵢ ≥ cₘₐₓ, forçage de Contᵢ = Contᵢ -cₘₐₓ, et
- forçage du registre de dépassement de capacité du canal Cᵢ à 1, Ovfᵢ = 1
- incrémentation d'une unité de la valeur du compteur de canal CONTN à chaque front du signal CKSEn d'horloge dérivé;
- activation du signal SYNCᵢ si le canal Ci correspondant à la valeur existante du compteur de canal CONTN est en dépassement de capacité, à savoir si Ovfᵢ = 1 ;
- génération et envoi d'un signal (SyncRX) du module de réception GRX au récepteur RX pour activer la réception de l'unité Uj de données du signal existant depuis le canal Cᵢ activé.

10. Procédé selon la revendication 9, **caractérisé en ce que** la capacité totale existante c'_{TOT} des canaux Cᵢ est inférieure à la capacité maximum totale c_{TOT} des canaux Cᵢ eux-mêmes.
